# EUROPÄISCHE PATENTSCHRIFT

(11) **EP 1 025 179 B1**
(45) Veröffentlichungstag und Bekanntmachung des Hinweises auf die Patenterteilung: **04.10.2006**
(21) Anmeldenummer: 98955476.1
(22) Anmeldetag: 17.10.1998
(51) Int. Cl.: C09J 157/04, G09F 3/10, B65C 5/02, B65C 9/20

(54) **VERWENDUNG WÄSSRIGER POLYACRYLZUBEREITUNGEN FÜR ETIKETTIERVERFAHREN**
USE OF AN AQUEOUS POLYACRYLIC PREPARATION FOR LABELLING
UTILISATION D'UNE PREPARATION POLYACRYLIQUE AQUEUSE DANS LES PROCEDES D'ETIQUETAGE

(30) Priorität: 27.10.1997 DE 19747449
(43) Veröffentlichungstag der Anmeldung: 09.08.2000
(73) Patentinhaber: Henkel Kommanditgesellschaft auf Aktien, 40589 Düsseldorf (DE)
(72) Erfinder: HERLFTERKAMP, Bernhard, D-46236 Bottrop (DE); BROICH, Ludwig, D-40589 Düsseldorf (DE); ONUSSEIT, Hermann, D-42781 Haan (DE); GENSCH, Ingo, D-52441 Linnich (DE); SCHREYER, Thomas, D-51061 Köln (DE)
(86) Internationale Anmeldenummer: PCT/EP1998/006594
(87) Internationale Veröffentlichungsnummer: WO 1999/021930

(56) Entgegenhaltungen:
- EP-A- 0 048 950
- EP-A- 0 316 676
- EP-A- 0 770 655
- EP-B- 0 058 382
- CA-A- 1 103 099
- CA-A- 2 172 237
- DE-A- 4 126 230
- US-A- 4 983 656
- US-A- 5 049 416
- US-A- 5 229 447
- DATABASE WPI Section Ch, Week 9807 Derwent Publications Ltd., London, GB; Class A14, AN 98-075499 XP002090131 & RU 2 081 145 C (LESMA CO LTD) , 10. Juni 1997
- PATENT ABSTRACTS OF JAPAN vol. 010, no. 013 (C-323), 18. Januar 1986 & JP 60 166366 A (SOUKEN KAGAKU KK), 29. August 1985
- PATENT ABSTRACTS OF JAPAN vol. 014, no. 280 (C-0729), 18. Juni 1990 & JP 02 084483 A (TOKIWA KAGAKU KOGYO KK), 26. März 1990
- PATENT ABSTRACTS OF JAPAN vol. 015, no. 512 (C-0898), 26. Dezember 1991 & JP 03 227387 A (SEKISUI CHEM CO LTD), 8. Oktober 1991
- PATENT ABSTRACTS OF JAPAN vol. 017, no. 030 (C-1018), 20. Januar 1993 & JP 04 248888 A (TOYO INK MFG CO LTD), 4. September 1992
- PATENT ABSTRACTS OF JAPAN vol. 017, no. 154 (C-1040), 26. März 1993 & JP 04 318090 A (NIPPON CARBIDE IND CO INC), 9. November 1992
- PATENT ABSTRACTS OF JAPAN vol. 096, no. 007, 31. Juli 1996 & JP 08 076689 A (TOPPAN PRINTING CO LTD), 22. März 1996
- "LomaLabel: haftklebendes Etikettenmaterial, das sich in Wasser auflöst" 1996 , LOHMANN GMBH & CO KG -KLEBEBANDSYSTEME , NEUWIED DE XP002093881 siehe das ganze Dokument
- ANON: "LÖSEMITTEL: WASSER" PACK REPORT, Bd. 30, Nr. 4, April 1997, Seiten 30-31, XP002093880 Frankfurt de

## Beschreibung

Die Erfindung betrifft die Verwendung spezieller synthetischer, wasserlöslicher oder in Wasser dispergierter Polymerer zur Verklebung von hydrophilen, wasserdurchlässigen Substraten mit harten Oberflächen, insbesondere Kunststoffoberflächen.

Es ist seit langem bekannt, wäßrige Klebstoffzubereitungen zum Verkleben wasserdurchlässiger Substrate einzusetzen. Ein großer Anwendungsgebiet ist beispielsweise die Etikettierung von Flaschen. So wird beispielsweise in der deutschen Patentanmeldung DE 195 21 564 vorgeschlagen, ein Klebstoffsystem zum Rundumetikettieren aus einem Mitnahmeklebstoff und einem Überlappungsklebstoff aufzubauen, wobei der Mitnahmeklebstoffe hohe Naßklebkraft aufweisen soll und aus 5 bis 85 Gew.-% eines wasserlöslichen Polymeren auf Basis von Kasein, Stärke, Dextrin, Glucose, Polyvinylalkohol, Polyvinylalkohol, Polyvinylurethan oder Polyacrylsäure besteht. Wenngleich derartige Klebstoffe mit Erfolg in der Praxis eingesetzt werden können, so ergeben sich doch Schwierigkeiten beim Verkleben von Papieretiketten mit hydrophoben Substraten. Dies gilt insbesondere für die in der genannten Entgegenhaltung erwähnte Polyacrylsäure, die ein sehr hydrophiles Polymer darstellt.

Aus der deutschen Offenlegungsschrift 21 07 651 ist ein Verfahren zur Herstellung eines mechanisch stabilen Polymer Latex bekannt, der aus hydrophoben Monomeren und aus carboxylgruppentragenden Monomeren besteht. Die genannte Offenlegungsschrift beschreibt neben der Herstellung der Latices auch deren Verwendung zur Behandlung von Textilien oder für eine Pigmentierung zur Herstellung von Pigmentfarbenanstrichen. Ein Hinweis, daß sich Neutralisationsprodukte des Latex als Klebstoffe eignen, wird jedoch nicht gegeben.

In der auf die Anmelderin zurückgehenden internationalen Patentanmeldung WO93/3111 werden wasserhaltige Klebstoffe für die Etikettierung von Flaschen beschrieben. Diese basieren auf einem Leim, einem Kolophonium-Harz, einem synthetischen Harz und ein- oder mehrwertigen Alkoholen. Die Mitverwendung von Copolymeren aus hydrophoben und monomeren und säuregruppentragenden Monomeren wird nicht beschrieben.

Zwar können hydrophobere Oberflächen recht gut mit Leimen auf Basis von Kasein verklebt werden, doch kommt es unter ungünstigen Bedingungen bei industriellen Reinigungsprozessen, die dem Ablösen der Etiketten dienen, zu Geruchsbelästigungen.

Aufgabe der Erfindung war es daher, eine wäßrige Klebstoffzubereitung zu entwickeln, die an hydrophoben Oberflächen hohe Klebkraft entfaltet, eine hohe Abhängigkeit der Viskosität von der Temperatur zeigt, gute Adhäsion und ausreichend gute Haftung aufweist und darüber hinaus bei dem maschinellen Wiederablösen der Etiketten nicht zu Geruchsbelästigung oder zum Eindringen geruchsbildender Substanzen in die Kunststoffschicht führt.

Gegenstand der Erfindung ist daher die Verwendung wäßriger Zubereitungen, enthaltend
- 25 bis 50 Gew.-% eines Copolymeren, das aufgebaut ist aus 80 bis 10 Mol% Carboxylgruppen tragenden Monomeren und 15 bis 90 Mol% hydrophoben Monomeren entsprechend Anspruch 1 sowie
- ggf. eine oder mehrere Zumischkomponenten zur Verbesserung der Naßklebekraft und/oder zur Einstellung der offenen Zeit sowie ggf.
- Konservierungsmittel, Entschäumer, Farbstoffe und/oder andere übliche Inhaltsstoffe.
wobei die Zubereitung als wässrige lösung mit einem pH-Wert im Bereich von 6,5 bis 9 vorliegt, als Etikettierklebstoffe zum Verkleben wasserdurchlässiger, hydrophiler Substrate auf Formteile mit Kunststoffoberflächen.

In einer allgemeinen Ausführungsform schlägt die Erfindung vor, Copolymere aus hydrophoben Einheiten und säuretragenden Einheiten als Bindemittel, vorzugsweise als dominierende Bindemittel, im besonderen auch als alleinige Bindemittel, in wäßrigen Klebstoffen, wie sie hauptsächlich für die Verklebung von Papier mit hydrophoben Oberflächen angewendet werden, zu benutzen. Ohne die Erfindung auf eine Theorie einengen zu wollen, wird angenommen, daß die hydrophoben Anteile derartiger Polymerer eine adhäsive Bindung zu hydrophoben Oberflächen eingehen, während die gleichfalls vorhandenen hydrophilen Anteile an hydrophile Substrate binden.

Die erfindungsgemäß eingesetzten Polymeren zeigen eine Abhängigkeit der Löslichkeit vom pH-Wert, d. h. daß bei pH-Werten im sauren Bereich, bei denen die Säuregruppe nicht oder nur zu einem sehr geringen Anteil als Ionen vorliegen, das Polymer nicht löslich ist. Erst durch Neutralisation werden die Substanzen so hydrophil, daß sie in Lösung gehen.

Die im Rahmen der Erfindung als Klebstoffe eingesetzten Copolymeren entstehen durch Copolymerisation mindestens eines Monomeren der Sorte A mit mindestens einem Monomeren der Sorte B, wobei wahlweise auch noch weitere Monomere der Sorte C mitverwendet werden können. Im einzelnen gilt zu diesen verschiedenen Sorten von Monomertypen das Folgende:

Monomere der Sorte A sind hydrophobe Komponenten, d. h. copolymerisierte Monomere, die unter den Bedingungen der erfindungsgemäß vorgesehenen Emulsionscopolymerisation in Wasser als geschlossener Phase eine diskrete, disperse, organische Flüssigphase ausbilden. Im Rahmen der Erfindung werden als Monomere Ester ungesättigter polymerisierbarer Carbonsäuren, insbesondere der Acryl- und Methacrylsäure, Vinylaromaten wie Styrol, Alpha-Methylstyrol- und Vinyltoluol, Ester des Vinylalkohols, insbesondere Fettsäurevinylester, höhere N-Alkylamide ungesättigter polymerisierbarer Carbonsäuren, insbesondere der Acryl- und Methacrylsäure, sowie weitere copolymerisierbare olefinische Monomere, beispielsweise von der Art der Acryl- und Methacrylnitrils, des Vinylchlorids bzw. Vinylidenchlorids bzw. Olefine wie Ethylen, Butadien, Chlorbutadien und Isopren und vergleichbare Olefine ohne weitere Funktionalität eingesetzt. Besonders wichtig sind für diese Monomeren der Sorte A die Ester der Acrylsäure und Methacrylsäure, insbesondere entsprechende Ester mit niederen monofunktionellen Alkoholen, wie die C₁- bis C₅-Alkohole, vor allem die entsprechenden Methyl-, Butyl-, 2-Ethylhexyl- und/oder Ethylester.

Besondere Eignung besitzen weiterhin Vinylaromaten von der Art des Styrols. Weniger bevorzugt sind Ester des Vinylalkohols und Olefine ohne weitere Funktionalität. Gemeinsam ist diesen Monomeren der Sorte A neben ihren hydrophoben Eigenschaften die Tatsache, daß sie keine unmittelbar Salz bildende Gruppe aufweisen.

Die Monomeren der Sorte B sind Komponenten, die Carboxylgruppen tragen. Bevorzugte Beispiele sind Acrylsäure, Methacrylsäure, Itaconsäure und/oder Crotonsäure. Weniger bevorzugt sind Maleinsäure, Fumarsäure oder deren Halbester. Weitere Beispiele für Komponenten dieser Klasse sind Halogenacrylsäuren wie Alpha-Chloracrylsäure.

Während Monomere der Gruppen A und B stets bei der Herstellung der erfindungsgemäßen Klebstoffkomponenten eingesetzt werden, ist die Mitverwendung der im folgenden geschilderten Komponenten C fakulatativ. Als Komponenten C kommen hydrophile copolymerisierbare Monomere in Betracht. Typische Beispiele sind Acrylamid, Methacrylamid, Hydroxyethyleacrylat bzw. - methacrylat, Hydroxyethylacrylamid sowie deren N-Vinylpyrrolidon. Weitere Monomere dieses Typs sind Hydroxypropylacrylat bzw. -methacrylat, Hydroxybutylacrylat,
Partialester von Glycerin und Acrylsäure.

Das Molverhältnis hydrophoben Monomeren zu den Carboxylgruppentragenden Monomeren ist so gewählt, daß 15 bis 90 Mol-% hydrophobe Monomere, und 80 bis 10 Mol-% Carboxylgruppentragenden Monomeren eingesetzt werden.

Bei der Auswahl geeigneter Monomermischungen wird sich der Fachmann von den folgenden Grundüberlegungen leiten lassen:

Zur Gewährleistung eines ausreichenden hydrophoben Charakters der Copolymeren sollen mindestens 15 Mol-% hydrophobe Monomere vorliegen, vorzugsweise jedoch sollen 30 bis 50 Mol-% eingesetzt werden. Dabei gilt, daß solche Comonomeren, die einen stark ausgeprägten hydrophoben Charakter haben, etwa 2-Ethylhexylacrylat tendenziell eher in geringeren Mengen eingesetzt werden können, während Monomere der Klasse A mit relativ kurzen hydrophoben Seitengruppen wie etwa Methylacrylat oder Methylmethacrylat in größeren Mengen eingesetzt werden können. Ähnliche Überlegungen gelten für die Bestimmung einer geeigneten Anzahl carboxylgruppentragender Monomerer. So können etwa bei carbonsäuregruppentragenden Monomeren wie etwa Acrylsäure oder Methacrylsäure bevorzugt 20 bis 60 Mol-% eingesetzt werden.

Besonders bewährt haben sich Copolymere der folgenden Zusammensetzung:

| | |
|---|---|
| Ethylacrylat, Butylacrylat und/oder Styrol | 40 bis 90 Gew.-% |
| Acrylsäure und/oder Methacrylsäure | 10 bis 60 Gew.-% |
| gegebenenfalls Acrylamid | 0 bis 50 Gew.-% |

Für die erfindungsgemäßen Zwecke liegen die Copolymeren in Form wäßriger Lösungen vor. Dazu ist es nötig, die Säuregruppen zumindest teilweise zu neutralisieren, d. h. die wäßrigen Lösungen weisen einen pH im Bereich 6,5 bis 9, insbesondere 7 bis 8 auf.

Nach einer besonders bevorzugten Ausführungsform der Erfindung werden die Klebstofflösungen nach einem zweistufigen Verfahren hergestellt, bei dem in einer ersten Stufe ein Emulsionscopolymerisationsverfahren durchgeführt wird und in einer nachfolgenden Stufe der so erhaltene Polymerlatex durch Neutralisation mindestens eines Teils der Säuregruppen in eine Lösung umgewandelt wird.

Die Herstellung der erfindungsgemäß eingesetzten Latices durch Emulsionscopolymerisation erfolgt in an sich bekannter Weise. Wasser, Emulgatoren und Monomerengemisch werden zu einer feindispersen Emulsion (Öl-in-Wasser) aufbereitet, dann wird durch Zugabe von üblichen Katalysatorkomponenten die Polymerisation ausgelöst und üblicherweise in mehrstündiger Reaktion bei höchstens mäßig erhöhten Temperaturen (bis ca. 60 °C) abgeschlossen. In der bevorzugten Ausführungsform fallen dünnflüssige Latices an, die beim Ablaufen in dünner Schicht charakteristisch farblich irisierende Schichten bilden. Möglich ist allerdings auch die Bildung von etwas stärker viskosen Latices, die gleichwohl gut schüttbar sind.

Das Molekulargewicht der erfindungsgemäß als Klebstoffe eingesetzten Emulsionscopolymerisate liegt üblicherweise bei Werten von 30 000 bis 500 000 g/Mol und kann den Bereich von 1 Million erreichen. Die Viskositätswerte ηspez., gemessen als 0,1%ige Lösung in Ethanol/Essigsäure (99 : 1) bei 25 °C liegen üblicherweise mindestens bei 0,1.

Die Feststoffkonzentration der Latices kann 25 bis 50 Gew.-%, betragen. Besonders geeignet ist ein Feststoffgehalt im Bereich von 25 bis 40 Gew.-%. Die Latices enthalten neben den Copolymerisaten Emulgatoren, die in Mengen von 0,5 bis 15 Gew.-%, vorzugsweise von etwa 1 bis 10 Gew.-%, vorliegen können und zum Rest Wasser. Dieser Gehalt an Emulgatoren leitet sich insbesondere aus der erfindungsgemäß vorgesehenen Herstellung der neuen Klebstoffe ab, die - wie dargestelt - die in situ - Copolymerisation der Monomerkomponenten A, B und gegebenenfalls C als disperse Ölphase in der geschlossenen wäßrigen Phase vorsieht. Alle üblichen Öl-in-Wasser-Emulgatoren bzw. -Emulgatorsysteme (nichtionische, anionische bzw. kationische oberflächenaktive Mittel) können eingesetzt werden. Zu berücksichtigen ist dabei das allgemeine Fachwissen zur Stabilität der gebildeten Latices. So können als bevorzugte Emulgiermittel insbesondere Sulfatsalze bzw. Sulfosuccinatsalze von polyalkoxylierten Alkoholen, insbesondere höheren Alkoholen mit einer Kohlenstoffkette von 8 bis 20 C-Atomen bzw. entsprechend alkoxylierten Phenolen in Betracht kommen.

Wenngleich die Latices in einzelnen Fällen als solche zum Verkleben eingesetzt werden können, so ist es doch bevorzugt, die wäßrigen neutralen Lösungen als Klebstoffe einzusetzen. Dabei kann die Neutralisation mit einer nichtflüchtigen Base, etwa einem Alkalimetallhydroxid oder einem nichtflüchtigen Amin, zum Beispiel Triethanolamin stattfinden. Bevorzugt sind Natriumhydroxid, Kaliumhydroxid und/oder Mono-, Di- bzw. Triethanolamin.

In Einzelfällen kann es auch sinnvoll sein, die Latices mit einer flüchtigen Base, zum Beispiel Ammoniak oder einem flüchtigen Amin zu neutralisieren. Dies ist insbesondere dann gewollt, wenn die verklebte Verbindung nach einiger Lagerzeit verbesserte Wasserfestigkeit aufweisen soll.

Im einzelnen ist dem Fachmann die Herstellung entsprechender Latices und deren Neutralisation bekannt. Verwiesen sei hier beispielsweise auf die deutschen Offenlegungsschriften 21 07 651, 21 35 073 oder 31 30 992.

Die erfindungsgemäßen Klebstoffe können andere in Etikettierklebstoffen gängige Rohstoffe mitenthalten oder mit üblichen Etikettierklebstoffen vermischt oder verschnitten werden. So können beispielsweise zur Verstärkung der Naßklebekraft Polysaccharide wie native Stärken, abgebaute Stärken, chemisch modifizierte Stärken, Dextrine oder Proteine, Polyvinylalkohol, Copolymere des Vinylacetats oder Harze, insbesondere wasserlösliche Balsam- oder Tallharze sowie deren chemische Umsetzungsprodukte eingesetzt werden. Unter diesen sind Stärke, Stärkederivate Dextrin und auch Celluloseether bevorzugt. Als Stärkederivate kommen solche in Frage, wie sie durch Umsetzung von nativer oder abgebauter, beispielsweise oxidativ abgebauter Stärke zu erhalten sind. Bei diesen Stärkederivaten handelt es sich in der Regel um Umsetzungsprodukte mit beispielsweise Ethylenoxid, Propylenoxid, Acrylnitril, Chloressigsäure oder auch Epoxypropansulfonsäure. Der Substituierungsgrad soll relativ niedrig liegen, etwa zwischen 0,02 bis 0,1 DS. Als Dextrin kann das handelsübliche dünn-, mittel- oder dick-kochende Dextrin verwendet werden, das in bekannter Weise durch Abbau von Stärke gewonnen werden kann.

Als Harze kommen in erster Linie Kolophoniumharze in Frage. Bei dem Kolophoniumharz handelt es sich um glasartige amorphe Massen mit durchschnittlichen Molekulargewichten unter 2 000 g/Mol. Sie werden aus dem Rohharz von Koniferen erhalten. Sie bestehen überwiegend aus ungesättigten Carbonsäuren mit der Bruttoformel C₂₀H₃₀C₂ wie Abietinsäure und ihren lsomeren. Daneben können aber auch noch mehr oder weniger Neutralstoffe wie Fettsäureester, Terpenalkohole und Kohlenwasserstoffe enthalten sein. Vorzugsweise wird ein derivatisiertes Kolophoniumharz eingesetzt, z. B. ein hydriertes oder disproportioniertes Kolophoniumharz, wobei die Derivatisierung, vor allem der Erhöhung der Wasserlöslichkeit dient, z. B. Verseifung oder Addition von Maleinsäure. Brauchbare Kolophoniumharze und seine Derivate sind Balsam-, Tall- und Wurzel-Harze. Besonders geeignet sind wasserlösliche Balsamharz-Derivate mit einer Löslichkeit von mindestens 3 g in 100 g Wasser bei 25 °C.

Unter "synthetischen Harzen" werden Produkte verstanden, die durch Kondensation oder Polymerisation entstehen, im allgemeinen amorph sind, keinen scharfen Erweichungspunkt haben und deren Zustand von flüssig über harzartig bis fest reichen kann. Vorzugsweise werden KohlenwasserstoffHarze eingesetzt, also thermoplastische Polymere mit einer geringen mittleren Molekularmasse von weniger als 2 000. In Frage kommen sowohl Petroleum-Harze, Kohlenteer-Harze als auch Terpen-Harze.

Als weitere Hilfsstoffe können in den erfindungsgemäßen Klebstoffzubereitungen Mittel zur Steuerung der offenen Zeit, insbesondere aus der Stoffklasse der Alkohole, eingesetzt werden. Diese werden üblicherweise in Mengen bis zu 20 Gew.-%, vorzugsweise in Mengen von 5 bis 10 Gew.-% eingesetzt. Als

Mittel zur Steuerung der offenen Zeit eignet sich zum Beispiel Zucker, Mono-, Di- oder Polyalkohole. Die Alkohole dienen nicht nur als Lösungsvermittler, sondern sie sind manchmal auch wesentlich für die Festigkeit der Verklebung. Sie sind daher vorzugsweise flüssig und verdampfen bei 25 °C aus dem Klebstoffsystem praktisch nicht. Bevorzugt werden Alkohole mit einer Löslichkeit von mehr als 3 g in 100 g Wasser bei 25 °C eingesetzt. Die Alkohole können aliphatische oder cycloaliphatische, gesättigte oder ungesättigte Kohlenwasserstoffe sein mit gerader oder verzweigter Kette. Sie können auch noch weitere Heteroatome enthalten, zum Beispiel Sauerstoff in Form einer EtherGruppe. Konkrete Beispiele sind Methanol, Ethanol, Propanol, Butanol, Benzyalalkohol, Cyclohexanol, Di-, Tri- und Polyethylenglykol. Bevorzugt werden zwei- und mehrwertige Alkohole, insbesondere Ethan-1,2-diol, Propan-1,2-diel und/oder Propan-1,2,3-trioi.

Der Gehalt an erfindungsgemäß einzusetzenden Copolymeren wie auch an den Mitteln zur Steuerung der offenen Zeit und an den Mitteln zur Verbesserung der Naßklebekraft kann in weiten Bereichen variieren. So werden die erfindungsgemäßen einzusetzenden Copolymeren in Mengen von 25 bis 50 Gew.-%, eingesetzt. Die Mittel zur Steuerung der offenen Zeit können in Mengen von 0 bis 20 Gew.-%, vorzugsweise von 5 bis 10 Gew.-%, eingesetzt werden. Die Mittel zur Naßklebekraftverbesserung können in Mengen von 0 bis 40 Gew.-% eingesetzt werden. Wegen der an sich schon recht guten Naßklebekraft der erfindungsgemäßen Zubereitung werden hier jedoch, wenn überhaupt, nur geringe Mengen benötigt. So etwa Mengen von 5 bis 20 Gew.-%.

Darüber hinaus können die erfindungsgemäßen Klebstoffe auch weitere Zusätze enthalten, um spezielle Eigenschaften zu erzielen, zum Beispiel im Hinblick auf Viskosität, Löslichkeit, Haltbarkeit, Verarbeitungseigenschaften, Farbe und dergleichen. Diese Zusätze werden im allgemeinen in Mengen von nicht mehr als 5 Gew.-%, vorzugsweise in Mengen von 0,01 bis 4 Gew.-% eingesetzt.

So setzt man als Konservierungsmittel vorteilhaft Benzoate, Fluoride wie Natriumfluorid, amidische Substanzen und Hydroxybenzoesäureester, z. B. p-Oxybenzoesäuremethylester oder -butylester in Mengen von 0,2 bis 0,6 Gew.-% ein. Als Antischaummittel kommen in Frage: Stearate, Silikonöl sowie Additionsprodukte von Ethylenoxid oder Propylenoxid an Fettalkohole mit 12 bis 18 C-Atomen in Mengen von 0,3 bis 2,5 Gew.-%. Die Fließfähigkeit des Klebstoffes kann durch Zusatz bestimmter wasserlöslicher niedermolekularer Verflüssiger in an sich bekannter Weise reguliert werden. Dazu eignen sich besonders Harnstoff, Thioharnstoff und/oder Dicyanaiamid, aber auch anorganische oder organische Salze wie Halogenide, Nitrate, Sulfate etc. Weitere Zusätze können sein: Duftstoffe, Farbstoffe oder Füllstoffe sowie Tenside als Benetzungsmittel. Soweit die erfindungsgemäßen Klebstoffe durch Neutralisation eines Polymerlatex hergestellt sind, sind derartige Tenside bereits vorhanden.

Die erfindungsgemäß zu verwendenden Klebstoffe werden durch Mischen der Komponenten in an sich bekannter Weise hergestellt. Dabei kann es zweckmäßig sein zunächst durch Neutralisation und Auflösen des Copolymers, eine Polymerlösung herzustellen, zu der man dann eine wäßrige oder alkoholische Lösung bzw. Dispersion der anderen Komponenten zugibt.

Die Viskosität des fertigen Klebstoffs liegt üblicherweise im Bereich von 10 000 bis 200 000 mPa . s, insbesondere im Bereich von etwa 20 000 bis 100 000 bei 25 °C nach Brookfield.

Die erfindungsgemäßen Klebstoffe eignen sich insbesondere zum Verkleben von Kunststoff-Oberflächen mit Papier, insbesondere mit Papier-Etiketten. Eine gute Verklebung setzt eine ausreichende Benetzung der Kunststoffoberfläche mit dem erfindungsgemäßen wäßrigen Klebstoff voraus. Sie ist insbesondere dann gegeben, wenn die Oberflächenenergie Sigma > 33 mJm⁻² beträgt, wenn die Messung gemäß ASTM 2578-67 durchgeführt wird. So werden mit PU-beschichtetem Glasl Polystyrol, Polycarbonat, Polyvinylchlorid, Polyethylenterephthalat so gute Verklebungen erreicht, daß Papier-Etiketten beim Entfemen zerreißen. Aber auch für andere Kunststoffe ist der erfindungsgemäße Klebstoff brauchbar, z. B. für Polyethylen oder Polypropylen.

Die zu beklebenden Formteile können durchgehend aus Kunststoff sein, z. B. Kunststoffbehälter wie Flaschen, Dosen, Eimer, Becher usw. Sie können aber auch nur eine Kunststoffoberfläche haben und im übrigen aus Metall, Glas oder Holz sein, zum Beispiel Weißblech-Dosen, beschichtete Glasflaschen, lackiertes Holz usw.

### BEISPEILE

### 1. Herstellung des Klebstoffes

Eine handelsübliche Polyacrylatdispersion auf Basis Butylacrylatacrylsäure (zum Beispiel Jagotex KEM 2779, Lieferant Firma Jäger, Düsseldorf) wird auf einen Feststoffgehalt von ca. 35 Gew.-% eingestellt und mit Natronlauge auf einen pH-Wert zwischen 8 und 9 gebracht. Die so erhaltene klare viskose Lösung kann direkt als Klebstoff eingesetzt werden.

### 2. Verklebung

Dieser Klebstofflösung wurden handelsübliche, polyurethanbeschichtete Mehrwegflaschen mit Papieretiketten superkote SK und terroset Fa. Feldmühle entsprechend der VDI-Richtlinie 3821 verklebt, indem zunächst der Klebstoff in einer Schichtdicke von ca. 100 µmauf das Etikett aufgetragen wurde. Danach wurden Etikett und Flasche mit geringem Druck zusammengefügt. Die Adhäsion der Copolymerlösung reichte aus, um die Flaschen sicher zu bekleben. Beim Wiederablösen der Etiketten war keine störende Geruchsbildung an den beklebten Stellen festzustellen.

## Patentansprüche

1. Verwendung wässriger Zubereitungen, enthaltend
- 25 bis 50 Gew.-% eines Copolymeren, das aufgebaut ist aus 80 bis 10 Mol-% Carboxylgruppen tragenden Monomeren und 15 bis 90 Mol-% hydrophoben Monomeren, ausgewählt aus den Estern ungesättigter polymerisierbarer Carbonsäuren. Vinylaromaten, Estern des Vinylalkohols, höheren N-Alkylamiden ungesättigter polymerisierbarer Carbonsäuren, copolymerisierbaren olefinischen Monomeren, wie Acryl- und Methacrylnitril, Vinylchlorid, Vinylidenchlorid und Olefinen, wie Ethylen sowie ggf.
- eine oder mehrerer Zumischkomponenten zur Verbesserung der Nassklebekraft und/oder zur Einstellung der offenen Zeit sowie ggf.
- Konservierungsmittel, Entschäumer, Farbstoffe und/oder andere übliche Inhaltsstoffe,
wobei die Zubereitung als wässrige Lösung mit einem pH-Wert im Bereich von 6,5 bis 9 vorliegt,
als Etikettierklebstoffe zum Verkleben wasserdurchlässiger, hydrophiler Substrate auf Formteile mit Kunststoffoberflächen.

2. Verwendung nach Anspruch 1, **dadurch gekennzeichnet, dass** die Zubereitung besteht aus:
- 25 bis 40 Gew.-% Copolymer,
- 0 bis 20 Gew.-%. vorzugsweise 5 bis 10 Gew.-% Mitteln zur Steuerung der offenen Zea,
- 0 bis 40 Gew.-%. vorzugsweise 5 bis 20 Gew.-% Nassklebkraftverbesserern,
- 0 bis 5 Gew.-%. vorzugsweise 0,01 bis 4 Gew.-% Farbstoffen, Entschäumern, Lösemitteln, Konservierungsmitteln und/oder weiteren in Etikettierklebstoffen üblichen Zusatzstoffen.

3. Verwendung nach einem der Ansprüche 1 oder 2, **dadurch gekennzeichnet, dass** bis zu 60 Mol-% der hydrophoben oder der säuregruppentragenden Monomeren durch wasserlösliche, nichtionische Monomere ersetzt sind, wobei jedoch die Untergrenze an hydrophoben Monomeren mindestens 15 Mol-%, vorzugsweise mindestens 30 Mol-% beträgt.

4. Verwendung nach einem der Ansprüche 1 bis 3, **dadurch gekennzeichnet, dass** die Zubereitung mit einer nichtflüchtigen Base, insbesondere einem Alkalimetallhydroxyd neutralisiert worden ist.

5. Verwendung nach einem der Ansprüche 1 bis 4, **dadurch gekennzeichnet, dass** die Zubereitung mit einer flüchtigen Base, insbesondere Ammoniumhydroxid oder einem flüchtigen Amin neutralisiert worden ist.

6. Verwendung nach einem der Ansprüche 1 bis 5, **dadurch gekennzeichnet, dass** die Viskosität zwischen 20 000 bis 100 000 mPas bei 25 °C beträgt.

7. Verwendung nach einem der Ansprüche 1 bis 6, **dadurch gekennzeichnet, dass** zur Verstärkung der Nassklebekraft native Stärken, abgebaute Stärken, chemisch modifizierte Stärken. Dextrine. Proteine, Polyvinylalkohole, Copolymere des Vinylacetats oder Harze, insbesondere wasserlösliche Balsam- oder Tallharze sowie deren chemische Versetzungsprodukte eingesetzt werden.

8. Verwendung nach einem der Ansprüche 1 bis 7, **dadurch gekennzeichnet, dass** als Mittel zur Steuerung der offenen Zeit Zucker, Mono-. Di- und/oder Polyalkohole eingesetzt werden.

9. Verwendung nach einem der Ansprüche 1 bis 8, **dadurch gekennzeichnet, dass** als Kunststoffoberflächen polyurethanbeschichtetes Glas, Polyethylenterephthalat. PVC. Polystyrol, Polyethylen und/oder Polypropylen eingesetzt werden.

10. Verwendung einer wässrigen Zubereitung nach einem der Ansprüche 1 bis 9, **dadurch gekennzeichnet, dass** auf ein Papieretikelt der wässrige Klebstoff aufgetragen wird und unmittelbar danach Etikett und Substrat mit Kunststoffoberfläche zusammengefügt werden.

## Claims

1. The use of aqueous preparations containing
- 25 to 50% by weight of a copolymer of 80 to 10 mol-% of carboxyl-containing monomers and 15 to 90 mol-% of hydrophobic monomers seclected from the esters of unsaturated polymerizable carboxylic acids, aromatic vinyl compounds, esters of vinyl alcohol, higher N-alkylamides of unsaturated polymerizable carboxylic acids, copolymerizable olefinic monomers, such as acrylonitrile and methacrylonitrile, vinyl chloride or vinylidene chloride, and olefins, such as ethylene, and, if desired,
- one or more auxiliaries for improving wet adhesive strength and/or for adjusting the open time and, if desired,
- preservatives, defoamers, dyes and/or other typical auxiliaries,
the preparation being present as an aqueous solution with a pH value of 6.5 to 9,
as labelling adhesives for bonding water-permeable hydrophilic substrates to mouldings with plastic surfaces.

2. The use claimed in claim 1, **characterized in that** the preparation consists of:
- 25 to 40% by weight of copolymer,
- 0 to 20% by weight and preferably 5 to 10% by weight of auxiliaries for controlling open time,
- 0 to 40% by weight and preferably 5 to 20% by weight of auxiliaries for improving wet adhesive strength,
- 0 to 5% by weight and preferably 0.01 to 4% by weight of dyes, defoamers, solvents, preservatives and/or other additives typically encountered in labelling adhesives.

3. The use claimed in claim 1 or 2, **characterized in that** up to 60 mol-% of the hydrophobic monomers or the monomers containing acid groups is replaced by water-soluble nonionic monomers, although the lower limit for hydrophobic monomers is at least 15 mol-% and preferably at least 30 mol-%.

4. The use claimed in any of claims 1 to 3, **characterized in that** the preparation is neutralized with a non-volatile base, more particularly an alkali metal hydroxide.

5. The use claimed in any of claims 1 to 4, **characterized in that** the preparation is neutralized with a volatile base, more particularly ammonium hydroxide, or a volatile amine.

6. The use claimed in any of claims 1 to 5, **characterized in that** the viscosity is in the range from 20,000 to 100,000 mPas at 25°C.

7. The use claimed in any of claims 1 to 6, **characterized in that** native starches, degraded starches, chemically modified starches, dextrins, proteins, polyvinyl alcohols, copolymers of vinyl acetate or resins, more particularly water-soluble gum or liquid rosins, and chemical reaction products thereof are used to improve wet adhesive strength.

8. The use claimed in any of claims 1 to 7, **characterized in that** sugars, mono-, di- and/or polyalcohols are used as the auxiliaries for controlling open time.

9. The use claimed in any of claims 1 to 8, **characterized in that** plastic surfaces used are polyurethane-coated glass, polyethylene terephthalate, PVC, polystyrene, polyethylene and/or polypropylene.

10. The use of an aqueous preparation as claimed in any of claims 1 to 9, **characterized in that** the water-based adhesive is applied to a paper label and the label and substrate with a plastic surface are joined together immediately afterwards.

## Revendications

1. Utilisation de préparations aqueuses, contenant
- 25 à 50% en poids d'un copolymère, qui est construit à partir de 80 à 10 % en moles de monomères portant des groupes carboxyle et de 15 à 90% en moles de monomères hydrophobes, choisis parmi les esters d'acides carboxyliques polymérisables insaturés, les substances aromatiques vinyliques, les esters de l'alcool vinylique, les N-alkylamides supérieurs d'acides carboxyliques polymérisables insaturés, les monomères oléfiniques copolymérisables, comme l'acrylonitrile et le méthacrylonitrile, le chlorure de vinyle, le chlorure de vinylidène et les oléfines, comme l'éthylène, ainsi qu'éventuellement,
- un ou plusieurs composants à ajouter au mélange pour améliorer le pouvoir adhésif à l'état mouillé et/ou pour ajuster le temps ouvert ainsi qu'éventuellement
- des agents conservateurs, des agents anti-mousse, des colorants et/ou d'autres ingrédients habituels,
la préparation existant sous forme de solution aqueuse ayant une valeur de pH dans la plage de 6,5 à 9,
en tant que colle d'étiquetage pour coller des substrats hydrophiles, perméables à l'eau, sur des pièces moulées ayant des surfaces de matière plastique.

2. Utilisation selon la revendication 1, **caractérisée en ce que**, la préparation se compose de :
- 25 à 40% en poids de copolymère;
- 0 à 20% en poids, de préférence de 5 à 10% en poids d'agents pour commander le temps ouvert,
- 0 à 40% en poids, de préférence de 5 à 20% en poids, d'agent améliorant le pouvoir adhésif à l'état mouillé,
- 0 à 5% en poids, de préférence 0,01 à 4% en poids de colorants, d'agents anti-mousses, de solvants, d'agents conservateurs, et/ou d'autres additifs courants dans les colles d'étiquetage.

3. Utilisation selon l'une des revendications 1 ou 2, **caractérisée en ce que**, jusqu'à 60% en moles des monomères hydrophobes ou portant des groupes acides sont remplacés par des monomères hydrosolubles, non ioniques, la limite inférieure en monomères hydrophobes étant toutefois au moins de 15% en moles, de préférence au moins de 30% en moles.

4. Utilisation selon l'une des revendications 1 à 3, **caractérisée en ce que** la préparation a été neutralisée par une base non volatile, en particulier un hydroxyde de métal alcalin.

5. Utilisation selon l'une des revendications 1 à 4, **caractérisée en ce que**, la préparation a été neutralisée par une base volatile, en particulier l'hydroxyde d'ammonium ou une amine volatile.

6. Utilisation selon l'une des revendications 1 à 5, **caractérisée en ce que** la viscosité est comprise entre 20 000 et 100 000 mPa.s à 25°C.

7. Utilisation selon l'une des revendications 1 à 6, **caractérisée en ce que** des amidons natifs, des amidons décomposés, des amidons chimiquement modifiés, des dextrines, des protéines, des poly(alcool vinylique)s, des copolymères de l'acétate de vinyle ou des résines, en particulier les résines balsamiques ou les résines d'huile du pin, ainsi que leurs produits de mélange chimiques, sont mis en oeuvre pour renforcer le pouvoir adhésif à l'état mouillé.

8. Utilisation selon l'une des revendications 1 à 7, **caractérisée en ce que** des sucres, des mono-, di- et/ou poly-alcools sont mis en oeuvre à titre d'agent de commande du temps ouvert.

9. Utilisation selon l'une des revendications 1 à 8, **caractérisée en ce que** le verre revêtu de polyuréthane, le poly(téréphtalate d'éthylène), le PVC, le polystyrène, le polyéthylène, et/ou le polypropylène, sont mis en oeuvre en tant que surfaces de matière plastique.

10. Utilisation d'une préparation aqueuse selon l'une des revendications 1 à 9, **caractérisée en ce que** la colle aqueuse est appliquée sur une étiquette de papier et, immédiatement après, l'étiquette et le substrat ayant une surface de matière plastique sont réunis.
